# EUROPÄISCHE PATENTSCHRIFT

(11) **EP 0 470 395 B1**
(45) Veröffentlichungstag und Bekanntmachung des Hinweises auf die Patenterteilung: **29.09.1993**
(21) Anmeldenummer: 91111705.9
(22) Anmeldetag: 13.07.1991
(51) Int. Cl.: B60Q 1/115

(54) **Verfahren und Einrichtung zur Regelung der Leuchtweite eines Kraftfahrzeuges**
Method and device for controlling the light beam of a vehicle
Dispositif et procédé pour régler la portée de l'éclairage d'un véhicule

(30) Priorität: 06.08.1990 DE 4024913
(43) Veröffentlichungstag der Anmeldung: 12.02.1992
(73) Patentinhaber: Hella KG Hueck & Co., 59552 Lippstadt (DE)
(72) Erfinder: Hussmann, Micha, W-4780 Lippstadt (DE); Hufnagel, Joachim, W-5750 Menden 1 (DE)

(56) Entgegenhaltungen:
- EP-A- 0 355 539
- DE-A- 3 807 731

## Beschreibung

Die Erfindung betrifft ein Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem das sich ergebene Differenzsignal als Sollwertsignal durch eine erste Mittelwertbildung gefiltert wird, wobei die Zeit für die erste Mittelwertbildung durch eine erste Filterzeitkonstante bestimmt ist und bei dem Stellelemente in ihrer Lage geregelt werden, wenn das erste gefilterte Sollwertsignal von einem voreingegebenen oder zuvor eingestellten wert abweicht, und eine Einrichtung entsprechend dem Oberbegriff des Anspruchs 5.

Ein Verfahren und eine Einrichtung zur Regelung der Leuchtweite eines Kraftfahrzeuges dieser Art ist aus der deutschen Offenlegungsschrift DE-A-3 110 094 (A1) bekannt.

Fühler, die die relative Stellung der Karosserie eines Fahrzeugs zu den Fahrzeugachsen oder Fahrzeugrädern messen, sind an einen Analog-Multiplexer angeschlossen, der die von den Fühlern anliegenden Signale über einen Analog/Digital-Wandler einem Microprozessor zuführt. Eine Filterung der anliegenden Signale erfolgt, indem in einem festgelegten Zeitabstand eine Mittelwertbildung der Signale durchgeführt wird. Dazu wird die Anzahl der einzubeziehenden Meßwerte vorgegeben. Aus den Mittelwerten wird dann für je ein Fühlerpaar, entsprechend einem Vorderachsfühler und einem Hinterachsfühler, ein Differenzsignal gebildet, das einem Scheinwerfereinstellwert entspricht. Jedes dieser Differenzsignale wird einem Digital/Analog-Wandler zugeführt, der über je einen nachgeschalteten Operationsverstärker mit einer Scheinwerferstelleinrichtung verbunden ist. In Abhängigkeit von dem Vorzeichen der Differenzsignale werden somit Stellelemente vor oder zurück bewegt und Scheinwerferlageregister im Microprozessor hoch oder herunter gezählt. Das Differenzsignal muß zudem einen vorgegebenen Schwellwert überschreiten, bevor die Scheinwerferstelleinrichtung betätigt wird.

Als besonders nachteilig erweist sich hierbei, daß Neigungsänderungen der Fahrzeugkarosserie, die nicht auf eine Veränderung der Beladung oder auf Fahrbahnunebenheiten zurückzuführen sind, nicht erkannt werden und die Regelung bei dem Auftreten solcher Neigungsänderungen nicht verändert wird, wodurch es zu Fehleinstellungen der Leuchtweite kommt, so daß der Gegenverkehr geblendet wird und gefährliche Situationen herbeigeführt werden. Eine solche Neigungsänderung kann z. B. durch eine Kurvenfahrt bedingt sein, wobei bei einer hier vorgeschlagenen Filterzeitkonstante für die Mittelwertbildung von einer Minute nach Beendigung einer Kurvenfahrt eine fehlerhafte Scheinwerfereinstellung vorgenommen wird, da während der Zeit der Kurvenfahrt Meßwerte für die Mittelwertbildung verwendet werden, die die Betriebsbedingungen bei einer Geradeausfahrt verfälschen.

Als nachteilig bei der vorbekannten Einrichtung zur Regelung der Leuchtweite eines Kraftfahrzeugs erweist sich, daß vier Fühler erforderlich sind, die die relative Stellung der Karosserie eines Fahrzeugs zu den Fahrzeugsachsen oder Fahrzeugrädern messen, die über einen Analog-Multiplexer mit einem Microprozessor verbunden sind, weil sich somit eine kostenintensive und aufwendig aufgebaute Einrichtung ergibt, die zudem bei der Herstellung und der Montage hohe Kosten erzeugt.

Der Erfindung liegt die Aufgabe zugrunde, eine Regelung der Leuchtweite eines Kraftfahrzeugs zu schaffen, die einfach und kostengünstig ist, und die Neigungsänderungen der Fahrzeugkarosserie, die nicht auf eine Änderung der Beladung oder auf Fahrbahnunebenheiten zurückzuführen sind, erkennt und durch diese Neigungsänderungen bedingt Fehleinstellungen bei der Regelung der Leuchtweite vermeidet.

Die Aufgabe wird bei dem Verfahren nach Anspruch 1 erfindungsgemäß dadurch gelöst, daß gleichzeitig zur ersten Mittelwertbildung eine zweite Mittelwertbildung des Sollwertsignals mit einer zweiten kurzen Filterzeitkonstante und eine dritte Mittelwertbildung des Sollwertsignals mit einer dritten langen Filterzeitkonstante erfolgt, daß das so erzeugte zweite gefilterte Sollwertsignal mit dem so erzeugten dritten gefilterten Sollwertsignal verglichen wird und daß bei Vorliegen einer Differenz zwischen dem zweiten gefilterten Sollwertsignal und dem dritten gefilterten Sollwertsignal die erste Mittelwertbildung unterbrochen wird und nach dem Wegfall einer Differenz wieder eingeschaltet wird.

Es ist von Vorteil, daß gleichzeitig zur ersten Mittelwertbildung eine zweite Mittelwertbildung des Sollwertsignals mit einer zweiten kurzen Filterzeitkonstante und eine dritte Mittelwertbildung des Sollwertsignals mit einer dritten langen Filterzeitkonstante erfolgt, weil somit auf einfache und kostengünstige Weise zum einen ein erstes gefiltertes Sollwertsignal gebildet wird, das den Regler derart ansteuert, daß die Leuchtweite des Kraftfahrzeugs in Abhängigkeit von den auftretenden Neigungsänderungen bestmöglich eingestellt wird und zudem ein zweites gefiltertes Sollwertsignal erzeugt wird, das aufgrund der zweiten kurzen Filterzeitkonstante kurzzeitige Änderungen in der Neigung der Fahrzeugkarosserie für eine weitere Auswertung zur Verfügung stellt und zudem ein drittes gefiltertes Sollwertsignal gebildet wird, das aufgrund der dritten langen Filterzeitkonstante für die weitere Auswertung ein Signal zur Verfügung stellt, auf das kurzzeitige Neigungsänderungen der Fahrzeugkarosserie keinen oder nur geringen Einfluß haben.

Dadurch, daß das so erzeugte zweite gefilterte Sollwertsignal mit dem so erzeugten dritten gefilterten Sollwertsignal verglichen wird, ergibt sich der Vorteil, daß Änderungen der Neigung der Fahrzeugkarosserie, die nicht auf eine Veränderung der Beladung oder auf Fahrbahnunebenheiten zurückzuführen sind, auf besonders einfache und kostengünstige Weise gemessen und erkannt werden können.

In diesem Zusammenhang erweist sich als besonders vorteilhaft, daß bei Vorliegen einer Differenz zwischen dem zweiten gefilterten Sollwertsignal und dem dritten gefilterten Sollwertsignal die erste Mittelwertbildung unterbrochen wird und nach dem Wegfall einer Differenz wieder eingeschaltet wird, weil somit bei einer solchen Neigungsänderung, die z. B. durch eine Kurvenfahrt bedingt sein kann, dem Regler ein erstes gefiltertes Sollwertsignal zugeführt wird, das unabhängig von den gemessenen Neigungsänderungen während der Kurvenfahrt ist, so daß eine Kurvenfahrt oder eine andere kurzzeitige Neigungsänderung der Fahrzeugkarosserie während der Fahrt keinen Einfluß auf das erste gefilterte Sollwertsignal hat und die Regelung mit dem vor der kurzzeitigen Neigungsänderung gebildeten ersten gefilterten Sollwertsignal erfolgt, wodurch Fehleinstellungen bei der Regelung der Leuchtweite und damit Blendungen des Gegenverkehrs, die zu gefährlichen Situationen führen können, vermieden werden, da die Regelung aufgrund des zuvor gebildeten ersten gefilterten Sollwerts erfolgt und somit die Einstellung der Scheinwerfer während der Zeit der Unterbrechung nicht verändert wird.

Es ist von Vorteil, daß die zweite Filterzeitkonstante kürzer als die erste Filterzeitkonstante ist und daß die dritte Filterzeitkonstante länger als die erste Filterzeitkonstante ist, weil somit zum einen eine Regelung der Leuchtweite des Kraftfahrzeugs ermöglicht wird, die alle Veränderungen der Neigung der Fahrzeugkarosserie bestmöglich erfasst und zum anderen sichergestellt wird, daß Neigungsänderungen der Fahrzeugkarosserie, die nicht durch eine Änderung der Beladung oder durch Fahrbahnunebenheiten bedingt sind, sicher erkannt werden und daß bei solchen Neigungsänderungen die erste Mittelwertbildung unterbrochen wird, so daß Fehleinstellungen sicher vermieden werden.

Dadurch, daß die erste Mittelwertbildung bei Vorliegen einer Differenz zwischen dem zweiten gefilterten Sollwertsignal und dem dritten gefilterten Sollwertsignal nur dann unterbrochen wird, wenn das Kraftfahrzeug eine Mindestgeschwindigkeit überschritten hat und/oder keine positive oder negative Beschleunigung des Kraftfahrzeugs vorliegt, ergibt sich zum einen der Vorteil, daß bei geringen Geschwindigkeiten des Kraftfahrzeugs entsprechend der ersten Mittelwertbildung alle Neigungsänderungen der Kraftfahrzeugkarosserie bei der Regelung der Leuchtweite berücksichtigt werden und zum anderen bei dem überschreiten der Mindestgeschwindigkeit die erste Mittelwertbildung nur dann unterbrochen wird und somit der erste gefilterte Sollwert auf den zuvor gebildeten Sollwert eingefroren wird, wodurch die Lage der Scheinwerfer nicht verändert wird, wenn keine positive oder negative Beschleunigung des Kraftfahrzeugs vorliegt, wodurch Fehleinstellungen der Leuchtweite auf einfache und kostengünstige Weise vermieden werden, da durch Beschleunigungen bedingte Neigungsänderungen bei der Regelung berücksichtigt werden.

In diesem Zusammenhang ist es besonders vorteilhaft, daß bei dem überschreiten mindestens eines Grenzwerts für eine positive und/oder negative Beschleunigung des Kraftfahrzeugs die erste Mittelwertbildung unterbrochen wird und nach der Beendigung des überschreitens eingeschaltet wird, weil somit z. B. bei einem kurzzeitigen starken Bremsen oder bei einem kurzzeitigen starken Beschleunigen die Einstellung der Scheinwerfer auf einen zuvor gebildeten Wert entsprechend dem zuvor gebildeten ersten gefilterten Sollwertsignal eingefroren wird, wodurch Fehleinstellungen der Scheinwerfer und damit die Herbeiführung gefährlicher Situationen vermieden werden.

Die Aufgabe wird erfindungsgemäß durch die Einrichtung nach Anspruch 5 dadurch gelöst, daß in der Verbindung zwischen dem Sollwertbildner und dem ersten Filter, der eine erste Filterzeitkonstante aufweist und der an den Regler angeschlossen ist, eine Schalteinrichtung angeordnet ist, daß der Sollwertbildner mit einem zweiten Filter verbunden ist, der eine zweite kurze Filterzeitkonstante aufweist, daß der Sollwertbildner mit einem dritten Filter verbunden ist, der eine dritte lange Filterzeitkonstante aufweist, daß der zweite Filter und der dritte Filter mit einem Subtrahierer verbunden sind, daß der Subtrahierer mit einer Kurvenerkennungseinrichtung verbunden ist und daß die Kurvenerkennungseinrichtung bei Vorliegen einer Differenz der Signale von dem zweiten Filter und dem dritten Filter die Schalteinrichtung öffnet und nach dem Wegfall einer Differenz die Schalteinrichtung wieder schließt.

Es ist von Vorteil, daß in der Verbindung zwischen dem Sollwertbildner und dem ersten Filter, der eine erste Filterzeitkonstante aufweist und der an den Regler angeschlossen ist, eine Schalteinrichtung angeordnet ist, weil somit bei einem öffnen der Schalteinrichtung die Mittelwertbildung des ersten Filters unterbrochen wird und das von dem ersten Filter gebildete erste gefilterte Sollwertsignal während der Zeit, in der die Schalteinrichtung geöffnet ist, auf einen festen zuvor gebildeten Wert eingefroren wird und somit auch die Einstellung der Scheinwerfer während dieser Zeit nicht verändert wird.

Dadurch, daß der Sollwertbildner mit einem zweiten Filter verbunden ist, der eine zweite kurze Filterzeitkonstante aufweist, ergibt sich der Vorteil, daß ein zweites gefiltertes Sollwertsignal gebildet wird, das stark von kurzzeitigen Änderungen in der Neigung der Fahrzeugkarosserie abhängt.

Dadurch, daß der Sollwertbildner mit einem dritten Filter verbunden ist, der eine dritte lange Filterzeitkonstante aufweist, ergibt sich der Vorteil, daß ein drittes gefiltertes Sollwertsignal gebildet wird, das unabhängig oder fast unabhängig von kurzzeitig auftretenden Änderungen in der Neigung der Fahrzeugkarosserie ist.

In diesem Zusammenhang ist es vorteilhaft, daß der zweite Filter und der dritte Filter mit einem Subtrahierer verbunden sind, weil somit auf besonders einfache und kostengünstige Weise eine Differenz der gebildeten zweiten und dritten gefilterten Sollwertsignale gebildet werden kann, aufgrund derer Neigungsänderungen der Fahrzeugkarosserie, die nicht auf eine Veränderung der Beladung oder auf Fahrbahnunebenheiten zurückzuführen sind, leicht und ohne großen Aufwand erkannt werden können.

Es ist von Vorteil, daß der Subtrahierer mit einer Kurvenerkennungseinrichtung verbunden ist und daß die Kurvenerkennungseinrichtung bei Vorliegen einer Differenz der Signale von dem zweiten Filter und dem dritten Filter die Schalteinrichtung öffnet und nach dem Wegfall einer Differenz die Schalteinrichtung wieder schließt, weil somit auf einfache und kostengünstige Weise aufgrund der gebildeten Differenz eine Kurvenfahrt erkannt wird und bei dem Vorliegen einer Kurvenfahrt durch das Öffnen der Schalteinrichtung die Mittelwertbildung durch den ersten Filter unterbrochen wird, so daß die zuvor eingestellte Scheinwerfereinstellung eingefroren wird, wodurch die durch kurzzeitige Neigungsänderungen der Fahrzeugkarosserie bedingten Sollwerte nicht für die Regelung der Leuchtweite berücksichtigt werden, was Fehleinstellungen und die Herbeiführung gefährlicher Situationen vermeidet.

Dadurch, daß die zweite Filterzeitkonstante kürzer als die erste Filterzeitkonstante ist und daß die dritte Filterzeitkonstante länger als die erste Filterzeitkonstante ist, ergibt sich zum einen der Vorteil, daß die Leuchtweite aufgrund der ersten Filterzeitkonstanten bestmöglich in Abhängigkeit von den Neigungsänderungen der Fahrzeugkarosserie geregelt wird und zum anderen, daß auf besonders einfache und kostengünstige Weise sicher Neigungsänderungen erkannt werden, die nicht durch eine Veränderung der Beladung oder durch Fahrbahnunebenheiten bedingt sind, wodurch bei öffnung der Schalteinrichtung im Falle solcher Neigungsänderungen Fehleinstellungen der Leuchtweite besonders zuverlässig vermieden werden.

Es ist von Vorteil, daß die Kurvenerkennungseinrichtung zum einen mit einem Geschwindigkeitssignalbildner und zum anderen mit einem Beschleunigungssignalbildner verbunden ist und daß die Kurvenerkennungseinrichtung eine Geschwindigkeitsschwellwerteinrichtung aufweist, weil somit zum einen sichergestellt wird, daß bei geringen Geschwindigkeiten des Kraftfahrzeugs alle Neigungsänderungen aufgrund der ersten Filterzeitkonstanten des ersten Filters für die Regelung der Leuchtweite berücksichtigt werden und zum anderen eine Unterbrechung der Mittelwertbildung durch den ersten Filter durch die Kurvenerkennungseinrichtung nur dann eingeleitet werden kann, wenn keine Beschleunigung des Kraftfahrzeugs vorliegt, so daß Fehleinstellungen bei der Regelung der Leuchtweite vermieden werden.

Dadurch, daß der Beschleunigungssignalbildner mit einer Beschleunigungsschwellwerteinrichtung verbunden ist und daß die Beschleunigungsschwellwerteinrichtung bei dem überschreiten mindestens eines Grenzwerts für eine positive oder eine negative Beschleunigung des Kraftfahrzeugs die Schalteinrichtung öffnet und nach Beendigung des überschreitens wieder schließt, ergibt sich der Vorteil, daß bei kurzzeitigen starken Bremsungen oder kurzzeitigen starken Beschleunigungen des Kraftfahrzeugs der durch den ersten Filter gebildete erste gefilterte Sollwert nicht verfälscht wird, sondern die Regelung auf den zuvor gebildeten ersten gefilterten Sollwert eingefroren wird, wodurch Fehleinstellungen aufgrund kurzzeitiger starker Beschleunigungen oder Verzögerungen bei der Regelung der Leuchtweite auf einfache und kostengünstige Weise sicher und zuverlässig vermieden werden.

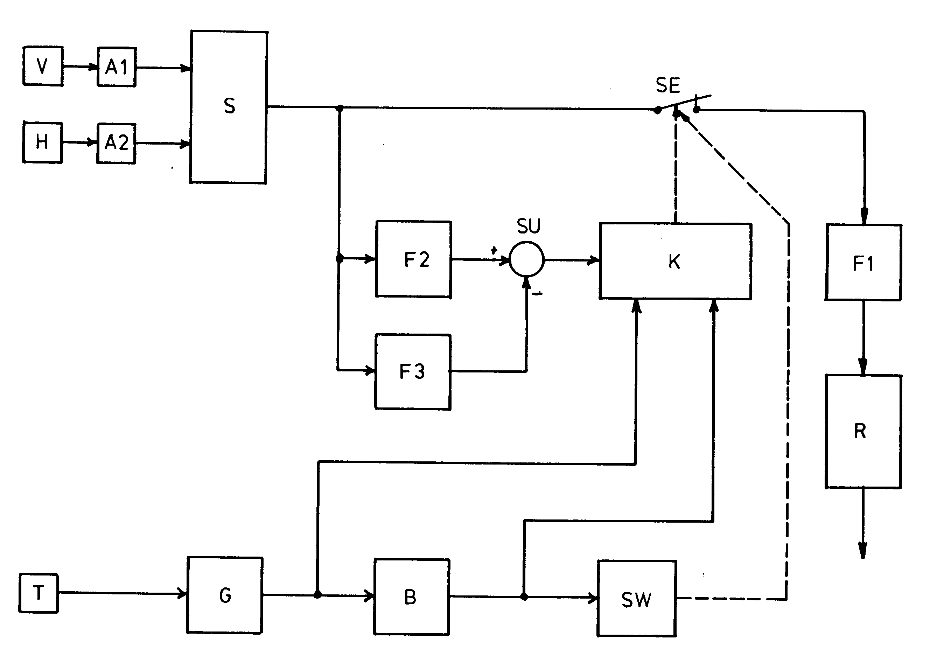

Ein Ausführungsbeispiel der Erfindung ist in der Zeichnung dargestellt und wird im folgenden näher beschrieben.

Die einzige Figur zeigt als Ausführungsbeispiel ein Blockschaltbild einer erfindungsgemäßen Einrichtung zur Regelung der Leuchtweite eines Kraftfahrzeugs.

Ein Vorderachsgeber (V), der analoge Signale in Abhängigkeit von der Lage der Fahrzeugkarosserie zu der Vorderachse erzeugt, ist elektrisch leitend über einen ersten Analog/Digital-Wandler (A1) mit einem Sollwertbildner (S) verbunden. Ein Hinterachsgeber (H), der analoge Signale in Abhängigkeit von der Lage der Fahrzeugkarosserie zu der Hinterachse bildet, ist elektrisch leitend über einen zweiten Analog/Digital-Wandler (A2) mit dem Sollwertbilder (S) verbunden. Der Sollwertbildner (S) bildet die Differenz aus den Signalen von dem Vorderachsgeber (V) und dem Hinterachsgeber (H) und multipliziert je nach Erfordernis die so gebildeten Sollwertsignale mit einem erforderlichen Verstärkungsfaktor.

Der Sollwertbildner (S) ist elektrisch leitend über eine Schalteinrichtung (SE) mit einem ersten Filter (F1) verbunden, der in Abhängigkeit von einer festen oder variablen ersten Filterzeitkonstante eine Mittelwertbildung der Sollwertsignale von dem Sollwertbildner durchführt. Die Filterzeitkonstante kann einen festen Wert von beispielhaft etwa 30 sec. aufweisen. Je nach den gegebenen Erfordernissen kann die Filterzeitkonstante jedoch auch kürzer oder länger sein. Bei einem anderen Ausführungsbeispiel kann die Filterzeitkonstante in Abhängigkeit von Fahrparametern des Kraftfahrzeugs veränderlich ausgeführt sein.

Der erste Filter (F1) ist elektrisch leitend mit einem Regler (R) verbunden, der die Lage von Stellelementen, die hier nicht gezeigt sind, zur Einstellung der Leuchtweite von Scheinwerfern des Kraftfahrzeugs regelt.

Der Sollwertbildner (S) ist zudem elektrisch leitend zum einen mit einem zweiten Filter (F2) und zum anderen mit einem dritten Filter (F3) verbunden, deren Ausgänge elektrisch leitend mit einem Subtrahierer (SU) verbunden sind. Der zweite Filter (F2) weist eine zweite kurze Filterzeitkonstante auf, wodurch ein zweites gefiltertes Sollwertsignal gebildet wird, das stark von kurzzeitigen Neigungsänderungen der Fahrzeugkarosserie abhängig ist. Der dritte Filter (F3) weist eine dritte lange Filterzeitkonstante auf, so daß ein drittes gefiltertes Sollwertsignal gebildet wird, das unabhängig oder weitgehend unabhängig von kurzzeitigen Änderungen der Neigung der Fahrzeugkarosserie ist. Das zweite gefilterte Sollwertsignal wird hier beispielhaft dem Subtrahierer (SU) mit positiven Vorzeichen zugeführt, während das dritte gefilterte Sollwertsignal hier beispielhaft mit negativen Vorzeichen dem Subtrahierer (SU) zugeführt wird. Der Subtrahierer (SU) bildet die Differenz der Signale von dem zweiten Filter (F2) und dem dritten Filter (F3), die von dem Einbauort der Achsgeber (V, H) abhängen, und leitet diese einer Kurvenerkennungseinrichtung (K) zu, die bei dem Vorliegen einer Differenz zwischen dem zweiten gefilterten Sollwertsignal und dem dritten gefilterten Sollwertsignal die Schalteinrichtung (SE) öffnet und bei dem Wegfall einer solchen Differenz die Schalteinrichtung (SE) wieder schließt. Die Schalteinrichtung (SE) kann dabei als ein Halbleiterschalter ausgebildet sein. Bei einem anderen Ausführungsbeispiel kann die Schalteinrichtung (SE) auch Teil eines ersten Filters (F1) sein.

Die Filterzeitkonstante des zweiten Filters (F2) kann beispielhaft etwa 1 sec. betragen, damit kurzzeitige Neigungsänderungen der Fahrzeugkarosserie schnell genug erkannt werden. Die Filterzeitkonstante des dritten Filters (F3) kann in dem Bereich weniger Minuten liegen, damit kurzzeitige Neigungsänderungen der Fahrzeugkarosserie das dritte gefilterte Sollwertsignal nicht oder nur geringfügig beeinflussen können. Die Filterzeitkonstanten können dabei je nach Anwendungsfall und Erfordernissen kürzer oder größer gewählt werden.

Damit bei geringen Geschwindigkeiten alle Änderungen in der Neigung der Fahrzeugkarosserie für die Regelung der Leuchtweite berücksichtigt werden können, ist die Kurvenerkennungseinrichtung (K) elektrisch leitend mit einem Geschwindigkeitssignalbildner (G) verbunden und weist eine Geschwindigkeitsschwellwerteinrichtung auf, durch die eine Mindestgeschwindigkeit vorgegeben wird, unterhalb dieser die Schalteinrichtung (SE) durch die Kurvenerkennungseinrichtung (K) nicht geöffnet wird. Zur Bildung eines Geschwindigkeitssignals durch den Geschwindigkeitssignalbildner (G) ist dieser mit einem Tachogenerator (T) verbunden. Die Mindestgeschwindigkeit kann beispielhaft etwa 30 km/h betragen. Je nach den Erfordernissen kann die Mindestgeschwindigkeit auch größer oder kleiner sein.

Der Geschwindigkeitssignalbildner (G) ist zudem mit einem Beschleunigungssignalbildner (B) verbunden, der wiederum elektrisch leitend mit der Kurvenerkennungseinrichtung (K) verbunden ist, die die Schalteinrichtung (SE) nur dann in Abhängigkeit von dem Vorliegen einer Differenz von dem Subtrahierer (SU) öffnet, wenn keine Beschleunigung des Kraftfahrzeugs vorliegt.

Damit bei kurzzeitigen positiven oder negativen Beschleunigungen des Kraftfahrzeugs, die z. B. bei Bremsungen oder bei kurzzeitigem starken Gasgeben auftreten, keine Fehleinstellungen der Leuchtweite entstehen, die zu gefährlichen Situationen führen können, ist der Beschleunigungssignalbildner (B) elektrisch leitend mit einer Beschleunigungsschwellwerteinrichtung (SW) verbunden, die bei dem überschreiten mindestens eines Grenzwertes für eine positive und/oder negative Beschleunigung des Kraftfahrzeugs die Schalteinrichtung (SE) öffnet und nach Beendigung des überschreitens wieder schließt.

Im folgenden wird kurz unter Zuhilfenahme der in der einzigen Figur gezeigten Einrichtung das Verfahren zur Regelung der Leuchtweite eines Kraftfahrzeugs beschrieben.

Jede Neigungsänderung der Fahrzeugkarosserie wird durch den Vorderachsgeber (V) und den Hinterachsgeber (H) gemessen, und die gemessenen Signale werden über den ersten und den zweiten Analog/Digital-Wandler (A1, A2) dem Sollwertbildner (S) zugeführt. Der Sollwertbildner (S) bildet die Differenz der einlaufenden Signale und multipliziert diese, falls erforderlich, mit einem Verstärkungsfaktor. Das so gebildete Sollwertsignal wird gleichzeitig dem ersten Filter (F1), dem zweiten Filter (F2) und dem dritten Filter (F3) zugeführt. Jeder dieser Filter (F1, F2, F3) führt entsprechend der jeweils wirksamen Filterzeitkonstante eine Mittelwertbildung der Sollwertsignale von dem Sollwertbildner (S) durch.

Die erste Filterzeitkonstante des ersten Filters (F1) wird dabei so gewählt, daß sich eine bestmögliche Regelung der Leuchtweite ergibt. Für eine besonders kostengünstige und einfache Regelung der Leuchtweite mit hier nicht gezeigten Stellelementen, die sehr einfach und robust aufgebaut sind, kann die erste Filterzeitkonstante beispielhaft etwa 30 sec. betragen, jedoch nach den gegebenen Erfordernissen auch kleiner oder größer sein.

Um eine Neigungsänderung der Fahrzeugkarosserie zu erkennen, die nicht auf eine Veränderung der Beladung oder auf Fahrbahnunebenheiten zurückzuführen ist, weist der zweite Filter (F2) eine zweite kurze Filterzeitkonstante auf, die beispielhaft etwa in dem Bereich von 1 Sekunde liegt, wodurch das gebildete zweite gefilterte Sollwertsignal kurzzeitige Änderungen in der Neigung der Fahrzeugkarosserie wiedergibt, und weist der dritte Filter (F3) eine dritte lange Filterzeitkonstante auf, wodurch das dritte gefilterte Sollwertsignal unabhängig oder weitgehend unabhängig von kurzzeitigen Änderungen in der Neigung der Fahrzeugkarosserie ist. Liegt eine Differenz zwischen dem zweiten gefilterten Sollwertsignal und dem dritten gefilterten Sollwertsignal vor, die durch den Subtrahierer (SU) gebildet wird, so unterbricht die Kurvenerkennungseinrichtung (K) die erste Mittelwertbildung durch den ersten Filter (F1), so daß die zuvor eingeregelte Scheinwerfereinstellung eingefroren wird und Fehleinstellungen bedingt durch z. B. eine Kurvenfahrt vermieden werden. Nach dem Wegfall einer Differenz zwischen dem zweiten gefilterten Sollwertsignal und dem dritten gefilterten Sollwertsignal wird die erste Mittelwertbildung wieder eingeschaltet.

Die Unterbrechung der ersten Mittelwertbildung durch den ersten Filter (F1) ist dabei an zwei Bedingungen geknüpft:
1. Damit bei geringen Geschwindigkeiten jede Änderung in der Neigung der Fahrzeugkarosserie durch die Regelung der Leuchtweite berücksichtigt wird, wird die erste Mittelwertbildung nur nach dem überschreiten einer Mindestgeschwindigkeit für das Kraftfahrzeug unterbrochen.
2. Die erste Mittelwertbildung wird nur dann unterbrochen, wenn keine Beschleunigung des Kraftfahrzeugs vorliegt.

Damit bei kurzzeitigen kräftigen, positiven oder negativen Beschleunigungen des Kraftfahrzeugs, die z. B. bei einem starken Bremsen oder bei einem kurzzeitigen kräftigen Gasgeben auftreten, keine Fehleinstellungen bei der Regelung der Leuchtweite auftreten, die zu Blendungen des Gegenverkehrs oder zu Sichtweiteverlusten führen, wird bei dem überschreiten mindestens eines Grenzwerts für eine positive und/oder eine negative Beschleunigung des Kraftfahrzeugs die erste Mittelwertbildung unterbrochen und nach Beendigung des überschreitens wieder eingeschaltet.

Bei einem anderen Ausführungsbeispiel kann dem zweiten Filter (F2) direkt das digitalisierte Signal von dem Vorderachsgeber (V) und kann dem dritten Filter (F3) direkt das digitalisierte Signal von dem Hinterachsgeber (H) zugeführt werden, wodurch ebenfalls auf einfache und kostengünstige Weise eine Erkennung von Neigungsänderungen der Fahrzeugkarosserie möglich ist, die nicht auf eine Veränderung der Beladung, auf eine Änderung der Beschleunigung oder auf Fahrbahnunebenheiten zurückzuführen sind.

## Patentansprüche

1. Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem das sich ergebene Differenzsignal als Sollwertsignal durch eine erste Mittelwertbildung gefiltert wird, wobei die Zeit für die erste Mittelwertbildung durch eine erste Filterzeitkonstante bestimmt wird, und bei dem Stellelemente in ihrer Lage geregelt werden, wenn das erste gefilterte Sollwertsignal von einem voreingegebenen oder zuvor eingestellten Wert abweicht, dadurch gekennzeichnet, daß gleichzeitig zur ersten Mittelwertbildung eine zweite Mittelwertbildung des Sollwertsignals mit einer zweiten kurzen Filterzeitkonstante und eine dritte Mittelwertbildung des Sollwertsignals mit einer dritten langen Filterzeitkonstante erfolgt, daß das so erzeugte zweite gefilterte Sollwertsignal mit dem so erzeugten dritten gefilterten Sollwertsignal verglichen wird und daß bei Vorliegen einer Differenz zwischen dem zweiten gefilterten Sollwertsignal und dem dritten gefilterten Sollwertsignal die erste Mittelwertbildung unterbrochen wird und nach dem Wegfall einer Differenz wieder eingeschaltet wird.

2. Verfahren nach Anspruch 1, dadurch gekennzeichnet, daß die zweite Filterzeitkonstante kürzer ist als die erste Filterzeitkonstante und daß die dritte Filterzeitkonstante länger als die erste Filterzeitkonstante ist.

3. Verfahren nach Anspruch 2, dadurch gekennzeichnet, daß die erste Mittelwertbildung bei Vorliegen einer Differenz des zweiten gefilterten Sollwertsignals zu dem dritten gefilterten Sollwertsignal nur dann unterbrochen wird, wenn das Kraftfahrzeug eine Mindestgeschwindigkeit überschritten hat und/oder keine positive oder negative Beschleunigung des Kraftfahrzeugs vorliegt.

4. Verfahren nach Anspruch 3, dadurch gekennzeichnet, daß bei dem überschreiten mindestens eines Grenzwerts für eine positive und/oder eine negative Beschleunigung des Kraftfahrzeuges die erste Mittelwertbildung unterbrochen wird und nach der Beendigung des überschreitens wieder eingeschaltet wird.

5. Einrichtung zur Regelung der Leuchtweite eines Kraftfahrzeugs, mit einem Vorderachsgeber und einem Hinterachsgeber, die Signale in Abhängigkeit von der Lage der Fahrzeugkarosserie zu der Vorderachse und der Hinterachse bilden, mit einem Sollwertbildner, der die Differenz aus den Signalen von dem Vorderachsgeber und dem Hinterachsgeber bildet, mit mindestens einem ersten Filter, der eine Mittelwertbildung der Sollwerte durchführt, und mit einem Regler, der in Abhängigkeit von den gefilterten Sollwerten die Lage von Stellelementen zur Einstellung der Leuchtweite des Kraftfahrzeugs regelt, dadurch gekennzeichnet, daß in der Verbindung zwischen dem Sollwertbildner (S) und dem ersten Filter (F1), der eine erste Filterzeitkonstante aufweist und der an den Regler (R) angeschlossen ist, eine Schalteinrichtung (SE) angeordnet ist, daß der Sollwertbildner (S) mit einem zweiten Filter (F2) verbunden ist, der eine zweite kurze Filterzeitkonstante aufweist, daß der Sollwertbildner (S) mit einem dritten Filter (F3) verbunden ist, der eine dritte lange Filterzeitkonstante aufweist, daß der zweite Filter (F2) und der dritte Filter (F3) mit einem Subtrahierer (SU) verbunden sind, daß der Subtrahierer (SU) mit einer Kurvenerkennungseinrichtung (K) verbunden ist und daß die Kurvenerkennungseinrichtung (K) bei Vorliegen einer Differenz der Signale von dem zweiten Filter (F2) und dem dritten Filter (F3) die Schalteinrichtung (SE) öffnet und nach dem Wegfall einer Differenz die Schalteinrichtung (SE) wieder schließt.

6. Einrichtung nach Anspruch 5, dadurch gekennzeichnet, daß die zweite Filterzeitkonstante kürzer als die erste Filterzeitkonstante ist und daß die dritte Filterzeitkonstante länger als die erste Filterzeitkonstante ist.

7. Einrichtung nach Anspruch 6, dadurch gekennzeichnet, daß die Kurvenerkennungseinrichtung (K) zum einen mit einem Geschwindigkeitsignalbildner (G) und zum anderen mit einem Beschleunigungssignalbildner (B) verbunden ist und daß die Kurvenerkennungseinrichtung (K) eine Geschwindigkeitsschwellwerteinrichtung aufweist.

8. Einrichtung nach Anspruch 7, dadurch gekennzeichnet, daß der Beschleunigungssignalbildner (B) mit einer Beschleunigungsschwellwerteinrichtung (SW) verbunden ist und daß die Beschleunigungsschwellwerteinrichtung (SW) bei dem überschreiten mindestens eines Grenzwerts für eine positive und/oder eine negative Beschleunigung des Kraftfahrzeugs die Schalteinrichtung (SE) öffnet und nach Beendigung des überschreitens wieder schließt.

## Claims

1. Method for controlling the headlight range of a motor vehicle, where at one point on the front axle and at one point on the rear axle signals are measured which depend on the relative position of the vehicle body to the front axle and the rear axle, where a differential is generated between the signals from the front axle and those from the rear axle, where the resulting differential signal is filtered as a setpoint signal by a first averaging operation, the time for the first averaging operation being determined by a first filtering time constant, and where final control elements are controlled in respect of their position if the first filtered setpoint signal deviates from a programmed or previously set value,
characterised in that simultaneously with the first averaging operation a second averaging operation is performed on the setpoint signal using a second short filtering time constant and a third averaging operation is performed on the setpoint signal using a third long filtering time constant, that the second filtered setpoint signal thus generated is compared with the third filtered setpoint signal thus generated and that in the event of a differential between the second filtered setpoint signal and the third filtered setpoint signal the first averaging operation is interrupted and is resumed once a differential has been cancelled out.

2. Method according to claim 1, characterised in that the second filtering time constant is shorter than the first filtering time constant and that the third filtering time constant is longer than the first filtering time constant.

3. Method according to claim 2, characterised in that the first averaging operation is only interrupted in the event of a differential between the second filtered setpoint signal and the third filtered setpoint signal when the motor vehicle has exceeded a minimum speed and/or there is no positive or negative acceleration of the motor vehicle.

4. Method according to claim 3, characterised in that the first averaging operation is interrupted in the event of at least a limit value for positive and/or negative acceleration of the motor vehicle being exceeded and is resumed once said limit value is no longer exceeded.

5. Device for controlling the headlight range of a motor vehicle, having a front axle sensor and a rear axle sensor which generate signals in response to the position of the vehicle body to the front axle and the rear axle, having a setpoint generator which generates the differential from the signals from the front axle sensor and the rear axle sensor, having at least a first filter which performs averaging of the setpoints, and having a controller which in response to the filtered setpoints controls the position of final control elements for adjusting the headlight range of the motor vehicle,
characterised in that a switching device (SE) is arranged in the link between the setpoint generator (S) and the first filter (F1), which incorporates a first filtering time constant and which is connected to the controller (R), that the setpoint generator (S) is linked to a second filter (F2) which incorporates a second short filtering time constant, that the setpoint generator (S) is linked to a third filter (F3) which incorporates a third long filtering time constant, that the second filter (F2) and the third filter (F3) are linked to a subtractor (SU), that the subtractor (SU) is linked to a cornering recognition device (K) and that in the event of a differential between the signals from the second filter (F2) and the third filter (F3) the cornering recognition device (K) opens the switching device (SE) and closes the switching device (SE) again once any differential has been cancelled out.

6. Device according to claim 5, characterised in that the second filtering time constant is shorter than the first filtering time constant and that the third filtering time constant is longer than the first filtering time constant.

7. Device according to claim 6, characterised in that the cornering recognition device (K) is linked on the one hand to a speed signal generator (G) and on the other hand to an acceleration signal generator (B) and that the cornering recognition device (K) incorporates a speed threshold value device.

8. Device according to claim 7, characterised in that the acceleration signal generator (B) is linked to an acceleration threshold device (SW) and that if at least a limit value for positive and/or negative acceleration of the motor vehice is exceeded the acceleration threshold device (SW) opens the switching device (SE) and closes it again once said limit value is no longer exceeded.

## Revendications

1. Procédé de régulation de la portée d'éclairage d'un véhicule automobile, dans lequel on mesure, en un endroit de l'essieu avant et en un endroit de l'essieu arrière, des signaux qui dépendent de la position relative de la carrosserie du véhicule par rapport à l'essieu avant et à l'essieu arrière, on exécute une formation de différence entre les signaux de l'essieu avant et ceux de l'essieu arrière, le signal-différence obtenu en tant que signal de valeur de consigne est filtré par une première formation de valeur moyenne, le temps pour cette première formation de valeur moyenne étant déterminé par une première constante de temps de filtre, et des éléments de réglage sont régulés dans leur position si le premier signal de valeur de consigne filtré diffère d'une valeur donnée à l'avance ou préalablement réglée, caractérisé par le fait qu'en même temps que la première formation de valeur moyenne, on effectue une deuxième formation de valeur moyenne du signal de valeur de consigne, avec une deuxième constante de temps de filtre qui est petite, et une troisième formation de valeur moyenne du signal de valeur de consigne avec une troisième constante de temps de filtre qui est grande, par le fait que l'on compare le deuxième signal de valeur de consigne filtré ainsi produit au deuxième signal de valeur de consigne filtré ainsi produit, et par le fait qu'en cas de différence entre le deuxième signal de valeur de consigne filtré et le troisième signal de valeur de consigne filtré on interrompt la première formation de valeur moyenne et on la réactive après la disparition d'une différence.

2. Procédé selon revendication 1, caractérisé par le fait que la deuxième constante de temps de filtre est plus petite que la première constante de temps de filtre et par le fait que la troisième constante de temps de filtre est plus grande que la première constante de temps de filtre.

3. Procédé selon revendication 2, caractérisé par le fait qu'en cas d'existence d'une différence entre le deuxième signal de valeur de consigne filtré et le troisième signal de valeur de consigne filtré, la première formation de valeur moyenne n'est interrompue que si le véhicule a dépassé une vitesse minimale et/ou s'il n'y a aucune accélération, positive ou négative, du véhicule automobile.

4. Procédé selon revendication 3, caractérisé par le fait qu'en cas de dépassement d'au moins une valeur-limite d'une accélération, positive et/ou négative, du véhicule automobile, on interrompt la première formation de valeur moyenne et on la réactive après la fin du dépassement.

5. Dispositif de régulation de la portée d'éclairage d'un véhicule automobile, comportant : un capteur d'essieu avant et un capteur d'essieu arrière qui forment des signaux en fonction de la position de la carrosserie du véhicule par rapport à l'essieu avant et à l'essieu arrière; un formateur de valeur de consigne qui forme la différence entre les signaux du capteur d'essieu avant et du capteur d'essieu arrière; au moins un premier filtre qui effectue une formation de valeur moyenne des valeurs de consigne; et un régulateur qui, en fonction des valeurs de consigne filtrées, règle la position d'éléments de réglage pour régler la portée d'éclairage du véhicule automobile, caractérisé par le fait qu'un dispositif de commutation (SE) est agencé sur la liaison entre le formateur de valeur moyenne (S) et le premier filtre (F1) qui présente une première constante de temps de filtre et est raccordé au régulateur (R); par le fait que le formateur de valeur moyenne (S) est relié à un deuxième filtre (F2) qui présente une deuxième constante de temps de filtre qui est petite; par le fait que le formateur de valeur moyenne (S) est relié à un troisième filtre (F3) qui présente une troisième constante de temps de filtre qui est grande; par le fait que le deuxième filtre (F2) et le troisième filtre (F3) sont reliés à un soustracteur (SU); par le fait que le soustracteur (SU) est relié à un dispositif de reconnaissance de courbe (K); et par le fait qu'en cas d'occurrence d'une différence entre les signaux du deuxième filtre (F2) et du troisième filtre (F3), le dispositif de reconnaissance de courbe (K) ouvre le dispositif de commutation (SE) et, après la disparition de la différence, referme ce dispositif de commutation (SE).

6. Dispositif selon revendication 5, caractérisé par le fait que la deuxième constante de temps de filtre est plus petite que la première constante de temps de filtre et par le fait que la troisième constante de temps de filtre est plus grande que la première constante de temps de filtre.

7. Dispositif selon revendication 6, caractérisé par le fait que le dispositif de reconnaissance de courbe (K) est relié d'une part à un formateur de signal de vitesse (G) et, d'autre part, à un formateur de signal d'accélération (B); et par le fait que le dispositif de reconnaissance de courbe (K) présente un dispositif de valeur de seuil de vitesse.

8. Dispositif selon revendication 7, caractérisé par le fait que le formateur de signal d'accélération (B) est relié à un dispositif de valeur de seuil d'accélération (SW); et par le fait qu'en cas de dépassement d'au moins une valeur-limite d'une accélération, positive et/ou négative, du véhicule, le dispositif de valeur de seuil d'accélération (SW) ouvre le dispositif de commutation (SE) et le referme après la fin du dépassement.
